# EUROPÄISCHE PATENTANMELDUNG

(11) **EP 4 696 483 A1**
(43) Veröffentlichungstag der Anmeldung: **18.02.2026**
(21) Anmeldenummer: 25185221.6
(22) Anmeldetag: 25.06.2025
(51) Int. Cl.: B29C 49/48, B29C 49/78, B29C 49/06, B29C 49/36, B29L 31/00

(54) **STRECKBLASVORRICHTUNG MIT EINEM WERKZEUGHALTER, STRECKBLASMASCHINE SOWIE VERFAHREN ZUM PRÜFEN EINES HALTEZUSTANDS**

(30) Priorität: 25.07.2024 DE 102024121245
(71) Anmelder: KHS GmbH, 44143 Dortmund (DE)
(72) Erfinder: Godau, Günther, 44143 Dortmund (DE); Gerkens, André, 44143 Dortmund (DE)

(57) **Zusammenfassung**

Die Erfindung betrifft eine Streckblasvorrichtung mit einem Werkzeughalter zum Aufnehmen eines Formwerkzeuges für Streckblasgegenstände, wobei der Werkzeughalter eine erste Verriegelungseinrichtung zum verriegelnden Halten eines aufgenommenen Formwerkzeuges aufweist, wobei die erste Verriegelungseinrichtung durch ein Bewegen von einer offenen Position in eine verriegelte Position aktivierbar ist, das Formwerkzeug in der verriegelten Position verriegelt im Werkzeughalter aufgenommen ist und ein erster Schließzustandsanzeiger der ersten Verriegelungseinrichtung in der verriegelten Position an einer ersten Verriegelungsposition angeordnet ist, wobei der ersten Verriegelungseinrichtung ein bildgebender fernoptischer Sensor zugeordnet ist, wobei der bildgebende fernoptische Sensor auf einer Sichtachse zum ersten Schließzustandsanzeiger angeordnet und dazu eingerichtet ist, entlang der Sichtachse ein fernoptisches Detektieren des ersten Schließzustandsanzeigers an der ersten Verriegelungsposition durchzuführen. Des Weiteren betrifft die Erfindung eine Streckblasmaschine sowie ein Verfahren zum Prüfen des Haltezustands eines Formwerkzeugs.

## Beschreibung

Die Erfindung betrifft eine Streckblasvorrichtung mit einem Werkzeughalter zum Aufnehmen eines Formwerkzeugs für Streckblasgegenstände, wobei der Werkzeughalter eine erste Verriegelungseinrichtung zum verriegelnden Halten eines aufgenommenen Formwerkzeugs aufweist, wobei die erste Verriegelungseinrichtung durch ein Bewegen von einer offenen Position in eine verriegelte Position aktivierbar ist, das Formwerkzeug in der verriegelten Position verriegelt im Werkzeughalter aufgenommen und ein erster Schließzustandsanzeiger der ersten Verriegelungseinrichtung in der verriegelten Position an einer ersten Verriegelungsposition angeordnet ist. Weiterhin betrifft die Erfindung eine Streckblasmaschine mit einer solchen Streckblasvorrichtung sowie ein Verfahren zum Prüfen eines Haltezustands eines Formwerkzeugs in einem Werkzeughalter einer Streckblasvorrichtung oder einer Streckblasmaschine.

Bekannte Streckblasvorrichtungen weisen üblicherweise einen Werkzeughalter zum Aufnehmen eines Formwerkzeuges auf. Das Formwerkzeug bildet dabei die spätere Form eines Streckblasgegenstandes invers ab, sodass durch Einbringen eines Rohlings und Einblasen von beispielsweise Luft ein Streckblasgegenstand, wie beispielsweise eine Getränkeflasche, formbar ist. Hierbei werden Formwerkzeuge oder auch Formwerkzeughälften in den Werkzeughalter eingesetzt, um beispielsweise einen Produktwechsel vorzunehmen, also beispielsweise gegenüber einer vorigen Getränkeflasche anders geformte Getränkeflaschen zu produzieren. Dabei ist es wichtig, insbesondere bei kontinuierlich arbeitenden Streckblasvorrichtungen oder auch Streckblasmaschinen, den Verriegelungszustand des Werkzeughalters zu überwachen und insbesondere sicherzustellen, dass das jeweilige Formwerkzeug sicher im Werkzeughalter gehalten und auch verriegelt ist.

Dazu sind auch Streckblasvorrichtungen bekannt, welche dazu beispielsweise Kontaktschalter aufweisen oder einer optischen, personell durchgeführten Überwachung eines entsprechenden Verriegelungszustandes bedürfen.

Weiterhin werden beispielsweise magnetische Sensoren eingesetzt, um den Verriegelungszustand der jeweiligen Verriegelungseinrichtung festzustellen, beispielsweise durch Detektieren einer Position des Formwerkzeuges im Werkzeughalter.

Aufgabe der Erfindung ist es, den Stand der Technik zu verbessern.

Gelöst wird die Aufgabe durch eine Streckblasvorrichtung mit einem Werkzeughalter zum Aufnehmen eines Formwerkzeuges für Streckblasgegenstände, wobei der Werkzeughalter eine erste Verriegelungseinrichtung zum verriegelnden Halten eines aufgenommenen Formwerkzeugs aufweist, wobei die erste Verriegelungseinrichtung durch ein Bewegen von einer offenen Position in eine verriegelte Position aktivierbar ist, das Formwerkzeug in der verriegelten Position verriegelt im Werkzeughalter aufgenommen ist und ein erster Schließzustandsanzeiger der ersten Verriegelungseinrichtung in der verriegelten Position an einer ersten Verriegelungsposition angeordnet ist, wobei der ersten Verriegelungseinrichtung ein bildgebender fernoptischer Sensor zugeordnet ist, wobei der bildgebende fernoptische Sensor auf einer Sichtachse zum ersten Schließzustandsanzeiger angeordnet und dazu eingerichtet ist, entlang der Sichtachse ein fernoptisches Detektieren des ersten Schließzustandsanzeigers an der ersten Verriegelungsposition durchzuführen.

Damit kann vorteilhafterweise eine fernoptische Überprüfung des Verriegelungszustandes der Verriegelungseinrichtung erfolgen, womit beispielsweise durch ein Anordnen entlang der Sichtachse ein geometrischer Abstand zum jeweiligen Schließzustandsanzeiger einhaltbar ist und dennoch ein entsprechender Schließzustand oder Verriegelungszustand sicher detektiert werden kann. Insbesondere kann damit auf aufwändig anzuschließende Sensorik, bei denen beispielsweise Kabel gezogen werden müssen, verzichtet werden womit der Aufbau der Streckblasvorrichtung und insbesondere des Werkzeughalters insbesondere in rotierenden Streckblasmaschinen deutlich einfacher gestaltet werden kann.

Folgende Begriffe seien in diesem Zusammenhang erläutert:

Eine "Streckblasvorrichtung" ist insbesondere eine technische Einrichtung zum Durchführen eines Streckblasverfahrens für Streckblasgegenstände, wobei die Streckblasvorrichtung dabei insbesondere einen Teil einer Maschine bildet, welche insgesamt zum Erzeugen von streckgeblasenen Gegenständen eingerichtet ist. Ein "Werkzeughalter" dient dabei dem Aufnehmen eines Formwerkzeuges, wobei der Werkzeughalter beispielsweise mehrteilig ausgebildet sein kann und insbesondere dem Wechsel von Formwerkzeugen dient.

Ein "Formwerkzeug" bildet dabei insbesondere die inverse Form des Streckblasgegenstandes ab, bildet also beispielsweise eine sogenannte Negativform für einen späteren Getränkebehälter oder eine Flasche. "Streckblasgegenstände" sind dabei beispielsweise Behälter, welche mittels einem Innendruck in das Formwerkzeug eingeblasen werden. Dazu wird üblicherweise ein "Rohling" verwendet, welcher insbesondere aus einem thermoplastischen Material besteht und damit durch Erhitzen erweichbar ist, sodass das Streckblasen am erhitzten Rohling durchgeführt werden kann. Es sei hierzu erwähnt, dass mittels Streckblasen insbesondere Getränkeflaschen oder auch flaschenartige Verpackungen für Medizinprodukte, wie beispielsweise Tabletten, hergestellt werden können.

Zum Aufnehmen und Verriegeln des Formwerkzeuges weist der Werkzeughalter eine jeweilige "Verriegelungseinrichtung" auf, wobei diese Verriegelungseinrichtung beispielsweise durch Nocken, Nasen, Vorsprünge oder andere mechanische Verriegelungselemente dazu eingerichtet ist, durch ein Bewegen der mechanischen Verriegelungselemente das Formwerkzeug im jeweiligen Werkzeughalter zu fixieren und zu halten. Ein "verriegelndes Halten" beschreibt insbesondere das Verriegeln des Formwerkzeuges im Werkzeughalter derart, dass ein Bewegen des Formwerkzeuges im Werkzeughalter vermieden ist. Insbesondere wird damit ein Herausfallen oder Verschieben des Formwerkzeuges im Werkzeughalter sicher verhindert. Sofern das Formwerkzeug im Werkzeughalter fest fixiert ist, ist insbesondere ein "aufgenommenes Formwerkzeug" erreicht.

Das "Bewegen" der Verriegelungseinrichtung bezeichnet insbesondere ein mechanisches, physisches Verschieben der Verriegelungseinrichtung oder eines Teils der Verriegelungseinrichtung derart, dass eine "offene Position" zum Entnehmen oder Wechseln des Werkzeughalters und eine "verriegelte Position" zum verriegelnden Halten des aufgenommenen Formwerkzeuges erreichbar sind. Das Bewegen kann dabei insbesondere linear oder auch rotatorisch erfolgen.

Ein "Schließzustandsanzeiger" beschreibt dabei eine mechanische oder auch optische Kennzeichnung, welche die Position der Verriegelungseinrichtung entlang der Bewegung insbesondere optisch oder auch auf andere Weise kennzeichnet. Sofern die verriegelte Position der Verriegelungseinrichtung erreicht ist, ist der Schließzustandsanzeiger an einer "Verriegelungsposition" angeordnet und damit optisch oder auf andere Weise detektierbar.

Ein "bildgebender fernoptischer Sensor" beschreibt insbesondere eine durch Aufnahme von Licht oder anderer elektromagnetischer Strahlung arbeitende Sensoreinrichtung, welche dazu eingerichtet ist, den Schließzustandsanzeiger mittels der aufgenommenen elektromagnetischen Strahlung zu detektieren und dadurch an einem bestimmten Ort zu verorten. Dazu ist der bildgebende fernoptische Sensor auf einer "Sichtachse" angeordnet, also einer Achse, die einen freien "Blick" des bildgebenden fernoptischen Sensors insbesondere auf die Verriegelungseinrichtung und den Schließzustandsanzeiger erlaubt, also insbesondere die elektromagnetische Strahlung ungehindert und ungestört zum Sensor gelangen kann.

Das "fernoptische Detektieren" des ersten Schließzustandsanzeigers an der ersten Verriegelungsposition bezeichnet dabei insbesondere das Feststellen des Vorhandenseins des jeweiligen Schließzustandsanzeigers an der jeweiligen Verriegelungsposition derart, dass mittels der Position des Schließzustandsanzeigers und des Feststellens des Vorhandenseins dieses Schließzustandsanzeigers an der Verriegelungsposition das sichere Verriegeln des Werkzeughalters detektiert ist. Es sei darauf hingewiesen, dass dazu dem bildgebenden fernoptischen Sensor Auswerteeinrichtungen oder beispielsweise auch eine Auswertesoftware zugeordnet sein kann, mittels der die jeweilige Position des Schließzustandsanzeigers beispielsweise aus einem Sensorsignal des bildgebenden fernoptischen Sensors auslesbar oder auswertbar ist.

Insbesondere für mehrteilige Werkzeughalter ist die erste Verriegelungseinrichtung an einer ersten Werkzeughalterhälfte und eine zweite Verriegelungseinrichtung an einer zweiten Werkzeughalterhälfte des Werkzeughalters angeordnet, wobei ein zweiter Schließzustandsanzeiger der zweiten Verriegelungseinrichtung in der verriegelten Position an einer zweiten Verriegelungsposition angeordnet ist, der bildgebende fernoptische Sensor auf einer jeweiligen Sichtachse zum jeweiligen Schließzustandsanzeiger angeordnet und dazu eingerichtet ist, entlang der jeweiligen Sichtachse ein fernoptisches Detektieren des ersten Schließzustandsanzeigers und des zweiten Schließzustandsanzeigers an der jeweiligen Verriegelungsposition durchzuführen.

Durch diese Ausgestaltung wird es ermöglicht, beispielsweise eine erste Werkzeughalterhälfte und eine zweite Werkzeughalterhälfte zum Aufnehmen einer jeweiligen Formwerkzeughälfte oder eines Formwerkzeugteils gleichzeitig mit dem bildgebenden fernoptischen Sensor zu überwachen. Folglich kann auch für mehrteilige Werkzeughalter auf mechanische Sensoren verzichtet werden.

**In** diesem Zusammenhang sei darauf hingewiesen, dass die "Sichtachse" dabei beispielsweise auch ein Sichtbereich oder ein Sichtkegel sein kann, entlang dessen der bildgebende fernoptische Sensor insbesondere jeweilige Verriegelungseinrichtungen und jeweilige Schließzustandsanzeiger insbesondere gleichzeitig überwachen kann.

Eine "Werkzeughalterhälfte" ist dabei insbesondere ein Teilbereich des Werkzeughalters, wobei jeweilige Werkzeughalterhälften gegeneinander beweglich, beispielsweise gegeneinander drehbar oder klappbar, angeordnet sind. Insbesondere ist eine solche Werkzeughalterhälfte dabei halbkreisförmig, sodass beispielsweise zwei Werkzeughalterhälften einen geschlossenen, im Wesentlichen runden Werkzeughalter bilden können. Dazu ist anzumerken, dass jeweilige Formwerkzeughälften beispielsweise analog oder kongruent zu jeweiligen Werkzeughalterhälften ausgebildet sein können. Zudem wird darauf hingewiesen, dass weitere Elemente des Formwerkzeuges unabhängig von den jeweiligen Formwerkzeughälften oder Formwerkzeugteilen vorhanden sein können, beispielsweise ein Werkzeug, welches den Boden einer im Wesentlichen zylindrischen Flasche abbildet.

In einer Ausführungsform ist oder sind eine weitere Verriegelungseinrichtung oder weitere Verriegelungseinrichtungen an der ersten Werkzeughalterhälfte und/oder an der zweiten Werkzeughalterhälfte angeordnet, wobei ein jeweiliger weiterer Schließzustandsanzeiger der weiteren Verriegelungseinrichtung in der verriegelten Position an einer jeweiligen Verriegelungsposition angeordnet ist und der bildgebende fernoptische Sensor auf einer jeweiligen Sichtachse zum jeweiligen Schließzustandsanzeiger angeordnet und dazu eingerichtet ist, entlang der jeweiligen Sichtachse ein fernoptisches Detektieren der jeweiligen Schließzustandsanzeige in der jeweiligen Verriegelungsposition durchzuführen.

Vorteilhafterweise können so auch eine Vielzahl von Verriegelungseinrichtungen mit einer Vielzahl von Schließzustandsanzeigern insbesondere durch einen einzelnen bildgebenden fernoptischen Sensor überwacht werden. Beispielsweise können so weitere Verriegelungseinrichtungen an jeweiligen Endbereichen von halbschalenförmigen Werkzeughalterhälften angeordnet sein, sodass beispielsweise eine eingelegte Formwerkzeughälfte sicher zweiseitig gehalten werden kann und dennoch ein einfaches und störungsfreies Entnehmen der Formwerkzeughälfte sichergestellt ist. Auch in diesem Zusammenhang wird darauf hingewiesen, dass die "Sichtachse" dabei beispielsweise auch unterschiedliche Sichtachsen aufweisen kann oder durch mehrere Sichtachsen gebildet wird, welche beispielsweise durch einen Sichtkegel des bildgebenden fernoptischen Sensors abgebildet sind, sodass der bildgebende fernoptische Sensor über jeweilige Sichtachsen oder Bereiche des Sichtkegels jeweilige Schließzustandsanzeiger insbesondere gleichzeitig aufnehmen, auswerten und damit prüfen kann.

Um ein manuelles oder auch automatisches Betätigen der jeweiligen Verriegelungseinrichtung durchführen zu können und auf weitere Bauteile dennoch verzichten zu können, weist oder weisen der erste Schließzustandsanzeiger, der zweite Schließzustandsanzeiger und/oder der jeweilige Schließzustandsanzeiger ein Bedienelement oder ein jeweiliges Bedienelement zum Betätigen der jeweiligen Verriegelungseinrichtung, insbesondere zum Betätigen der jeweiligen Verriegelungseinrichtung mittels eines Werkzeugs und/oder mittels eines Roboters, auf.

Damit kann beispielsweise ein als Bedienelement ausgeformtes Bauteil derart eingerichtet oder ausgeführt werden, dass gleichzeitig die Funktion des Schließzustandsanzeigers gegenüber dem bildgebenden fernoptischen Sensor erfüllt ist.

Ein "Bedienelement" ist in diesem Zusammenhang insbesondere ein knopfförmiger, hakenförmiger, taschenförmiger oder als Hinterschnitt ausgebildeter Bereich oder ein entsprechendes Element oder Bauteil, welches insbesondere an der Verriegelungseinrichtung derart angebracht oder angeordnet ist, dass ein Betätigen mit einem Werkzeug oder mittels eines Roboters ermöglicht ist. Beispielsweise wird das Bedienelement gebildet durch einen aufgeschraubten Knopf an der Verriegelungseinrichtung.

Ein "Werkzeug" kann dabei in einer einfachen Ausgestaltung ein Stab oder ein Haken sein, mittels dem ein manuelles Betätigen des Bedienelementes ermöglicht ist. Ein "Roboter", also eine zum Ausführen von mechanischen Arbeiten eingerichtete Maschine, kann dazu beispielsweise ein Gegenstück zum Bedienelement an einem Endeffektor aufweisen, sodass durch ein Einhängen des Gegenstücks am Bedienelement und eine Bewegung des Roboters das Betätigen der Verriegelungseinrichtung oder der jeweiligen Verriegelungseinrichtung durchgeführt werden kann.

Insbesondere bildet das Bedienelement oder das jeweilige Bedienelement den jeweiligen Schließzustandsanzeiger dabei teilweise oder vollständig.

Gemäß einer weiteren Ausgestaltung weist der erste Schließzustandsanzeiger und/oder der jeweilige Schließzustandsanzeiger, insbesondere das Bedienelement oder das jeweilige Bedienelement, einen optischen, mittels des bildgebenden fernoptischen Sensors detektierbaren Kontrast zur jeweiligen Verriegelungseinrichtung auf, wobei der optische Kontrast insbesondere mittels eines unterschiedlichen Materials, mittels einer unterschiedlichen Beschichtung und/oder mittels einer unterschiedlichen Oberflächenbearbeitung des jeweiligen Bedienelementes erzeugt ist.

Damit kann vorteilhaft das Bedienelement selbst durch eine entsprechende Bearbeitung oder Ausgestaltung direkt zum Erzeugen eines beispielsweise auch starken Kontrastes genutzt werden, sodass das Auswerten mittels des bildgebenden fernoptischen Sensors deutlich vereinfacht ist.

Ein "Kontrast" ist dabei insbesondere ein von einem ersten Bildbereich zu einem zweiten Bildbereich bestehender starker Unterschied der optischen Wirkung, insbesondere der optischen Wirkung für den bildgebenden fernoptischen Sensor. Hierzu wird darauf hingewiesen, dass der optische Kontrast beispielsweise ein Farbkontrast, ein Helligkeitskontrast oder ein Graustufenkontrast sein kann, jedoch auch durch einen optischen Kontrast im Infrarotbereich oder in einem anderen Spektrum des sichtbaren oder nicht sichtbaren Lichts ausgeführt sein kann. Beispielsweise kann ein bildgebender fernoptischer Sensor mit einer Empfindlichkeit im Infrarotbereich dazu genutzt werden, einen starken Infrarotkontrast eines Bedienelementes gegenüber der Verriegelungseinrichtung auszuwerten. Gleichsam kann auch ein Magnet-Kontrast eines magnetisch bildgebenden fernoptischen Sensors für einen magnetischen bildgebenden fernoptischen Sensor genutzt werden. So kann beispielsweise der Werkstoff des Bedienelementes magnetisch sein, während der Werkstoff der Verriegelungseinrichtung amagnetisch ausgeführt ist.

Ein "Material" ist dabei insbesondere ein Werkstoff oder ein Grundwerkstoff des Bedienelementes und der umgebenden Bereiche, wie beispielsweise der Verriegelungseinrichtung, eine "Beschichtung" kann eine aufgebrachte oder eingebrachte Beschichtung, wie beispielsweise eine Lackierung oder auch eine Eloxal-Schicht oder eine anderweitig chemisch bearbeitete Schicht, sein. Ebenso kann eine "Oberflächenbearbeitung" genutzt werden, indem beispielsweise entsprechende Kontraste durch ein jeweiliges Erzeugen unterschiedlicher Rautiefen, Glanzgrade oder Glättegrade der jeweiligen Oberflächen erreichbar ist.

In einer weiteren Ausführungsform weist die jeweilige Verriegelungseinrichtung einen Vorreiber oder mehrere Vorreiber, insbesondere einen oder mehrere mittels eines Verriegelungsschiebers und einer am Verriegelungsschieber angeordneten Steuerkurve betätigten Vorreiber oder mehrerer Vorreiber, auf.

Insbesondere mittels einer Steuerkurve im Verriegelungsschieber kann die Bewegungsrichtung des Vorreibers von der Bewegungsrichtung der Verriegelungseinrichtung, respektive des Verriegelungsschiebers, entkoppelt werden. So kann beispielsweise die Steuerkurve gekrümmt oder schräg angeordnet sein, sodass ein axiales Bewegen des Verriegelungsschiebers ein orthogonal dazu angeordnetes Verschieben des Vorreibers oder der Vorreiber erzeugt.

Damit kann erreicht werden, dass beispielsweise eine Bewegung des Verriegelungsschiebers parallel zu entsprechenden Kanten des Werkzeughalters oder der Werkzeughalterhälften erfolgen kann, während der jeweilige Vorreiber orthogonal dazu in Richtung des Formwerkzeugs oder der Formwerkzeughälfte eingefahren oder eingeführt wird, um das Formwerkzeug oder die Formwerkzeughälften zu verriegeln.

Ein "Vorreiber" ist dabei insbesondere ein mechanisches Bauteil, welches durch eine Axialbewegung vor oder zwischen eine bestehende Struktur gleitet, um diese mechanisch formschlüssig zu verriegeln.

Insbesondere ist der bildgebende fernoptische Sensor mittels einer Kamera oder mittels einer Infrarotkamera gebildet. Eine solche Kamera oder auch Infrarotkamera kann dabei beispielsweise als CCD-Kamera, Zeilenkamera oder pixelbasierte Kamera ausgeführt sein. Beispielsweise kann ein "Vision"-Sensor, insbesondere mit einer zugehörigen Bildauswertung, welche von unterschiedlichen Herstellern verfügbar sind. Dabei wird insbesondere ein Kamerasensor der Kamera mittels einer insbesondere in der Kamera integrierten Software ausgelesen, wobei Merkmale des aufgenommenen Bildes markiert und mit einem aktuell aufgenommenen Bild verglichen werden können. Dazu kann mit der Software beispielsweise ein Zählen oder Abgleichen von Pixeln erfolgen, ebenso können Konturen oder Farbwerkte einzelner Pixel oder jeweiliger Pixelbereiche abgefragt und abgeglichen werden, sodass insbesondere Veränderungen im Bild feststellbar sind.

In einem weiteren Aspekt wird die Aufgabe gelöst durch eine Streckblasmaschine mit einer Streckblasvorrichtung gemäß einer der vorig bezeichneten Ausführungsformen und einem Bestückungsroboter, wobei der Bestückungsroboter eine Greifvorrichtung zum Aufnehmen und/oder Ablegen des Formwerkzeugs außerhalb der Streckblasvorrichtung und Abgeben und/oder Herausnehmen des Formwerkzeugs in die Streckblasvorrichtung und/oder aus der Streckblasvorrichtung aufweist.

Eine solche Streckblasmaschine kann dabei insbesondere mit einem Werkzeugwechsel automatisiert betrieben werden, sodass der Bestückungsroboter beispielsweise vollautomatisch das Verriegeln, Entriegeln, Einbringen und Herausnehmen von Formwerkzeugen oder Formwerkzeughälften durchführt. Insbesondere wird der Bestückungsroboter dabei integral in die Steuerung der Streckblasmaschine eingebunden.

Eine "Streckblasmaschine" bezeichnet in diesem Zusammenhang eine gegenüber der Streckblasvorrichtung größere mechanische oder elektromechanische, insbesondere automatisierte, Einheit. Beispielsweise kann eine solche Streckblasmaschine zusätzlich zur Streckblasvorrichtung auch Fördereinrichtungen, Lagereinrichtungen oder auch Bereiche zum Abführen von fertig streckgeblasenen Behältern aufweisen.

Ein "Bestückungsroboter" ist dabei insbesondere ein Knickarmroboter, welcher Formwerkzeughälften greifen und mit der Streckblasvorrichtung interagieren kann. Ebenso kann der Bestückungsroboter jedoch auch in einer einfachen Ausgestaltung als mehrachsiger Bewegungsapparat ausgeführt sein.

Eine "Greifvorrichtung" beschreibt dabei beispielsweise eine mit den Formwerkzeughälften interagierende Vorrichtung zum Greifen der jeweiligen Formwerkzeughälfte. Durch diese Greifvorrichtung ist damit ein Aufnehmen, Ablegen, Abgeben und auch Herausnehmen des Formwerkzeuges oder der Formwerkzeughälften möglich.

Das "Aufnehmen" beschreibt dabei insbesondere das Eingreifen in das oder Angreifen am Formwerkzeug oder an der Formwerkzeughälfte, welche beispielsweise an einem Ablageort oder an einer Formwerkzeugbereitstellung außerhalb der Streckblasvorrichtung bereitgehalten wird, während das "Ablegen" das Herausbringen und beispielsweise Ablegen des Formwerkzeuges außerhalb der Streckblasvorrichtung, beispielsweise auf einem Werkzeugtisch oder einer Formwerkzeugbereitstellung, beschreibt. Damit ist durch das Aufnehmen insbesondere ein Führen oder auch Manipulieren des Formwerkzeuges oder der Formwerkzeughälfte mittels der Greifvorrichtung möglich.

Das "Abgeben" beschreibt in diesem Zusammenhang das Einlegen oder Einführen des Formwerkzeuges oder der Formwerkzeughälfte in den Werkzeughalter und beispielsweise auch gleichzeitiges oder nachfolgendes Lösen aus der Greifvorrichtung, während das "Herausnehmen" den umgekehrten Vorgang der Formwerkzeugentnahme beschreibt.

In einer Ausführungsform weist der Bestückungsroboter dabei eine Freischalteinrichtung auf, wobei die Freischalteinrichtung dazu eingerichtet ist, ein Sperren und ein Freischalten einer Werkzeuginteraktion des Bestückungsroboters durchzuführen, wobei das Sperren der Werkzeuginteraktion erfolgt, sofern zumindest ein Schließzustandsanzeiger an einer jeweiligen Entnahmeposition negativ detektiert ist und das Freischalten der Werkzeuginteraktion erfolgt und insbesondere nur erfolgt, sofern zumindest ein jeweiliger Schließzustandsanzeiger oder alle Schließzustandsanzeiger an einer jeweiligen Entnahmeposition positiv detektiert ist oder sind.

Vorteilhafterweise kann so eine Sicherheit hergestellt werden, dass beispielsweise die Interaktion und das Herausnehmen eines Formwerkzeuges nicht erfolgen kann, sofern noch zumindest ein Schließzustandsanzeiger ein Verriegeln einer jeweiligen Verriegelungseinrichtung anzeigt. Gleichsam kann invers sichergestellt werden, dass nur bei einem vollständigen Verschließen aller Verriegelungseinrichtungen der Roboter beispielsweise das Werkzeug aus der Greifeinrichtung entlässt, wenn dieses vollständig im Werkzeughalter fixiert ist.

Eine "Entnahmeposition" ist dabei analog zur Verriegelungsposition eine weitere Position, an der der Schließzustandsanzeiger angeordnet sein muss, um das vollständige Öffnen der Verriegelungseinrichtung darzustellen oder abzubilden. Damit wird insbesondere bei Detektion aller Schließzustandsanzeiger an einer jeweiligen Entnahmeposition eine Information eines "sicher offen", beispielsweise an eine Maschinensteuerung, gemeldet. Gleichzeitig kann das Anzeigen aller Schließzustandsanzeiger in der Verriegelungsposition dann als "sicher geschlossen" ausgewertet werden.

Gemäß einer Ausführungsform ist der Bestückungsroboter ein Knickarmroboter und/oder die Greifvorrichtung weist einen Aktuator zum mechanischen Betätigen des Bedienelementes oder eines jeweiligen Bedienelementes auf.

Folglich kann der Bestückungsroboter, beispielsweise als Knickarmroboter, besonders agil und geometrisch frei in die Streckblasmaschine eingreifen, um einen Werkzeugwechsel vorzunehmen. Sofern der Aktuator dann mit dem Bedienelement in Eingriff gebracht wird, kann der Roboter analog zur Bedienung durch eine Person gleichzeitig das Entriegeln oder Verriegeln der Verriegelungseinrichtung vornehmen und/oder die Werkzeuge bedienen oder bewegen.

Es sei hierzu angemerkt, dass der Bestückungsroboter sowohl wie erwähnt als Knickarmroboter, jedoch auch als kinematisch abweichend ausgeführt werden kann. Allgemein ist damit ein Roboter bezeichnet, welcher automatisiert oder teilautomatisiert mechanische Aufgaben erfüllt und damit beispielsweise auch als Mehrachsen-Roboter, als Linearkinematik oder als Hexapod-Roboter oder vergleichbar ausgeführt ist. Die Ausführung als Knickarmroboter ist hier beispielhaft als typische industrielle Ausführung eines Roboters genannt.

In einem weiteren Aspekt wird die Aufgabe gelöst durch ein Verfahren zum Prüfen eines Haltezustands eines Formwerkzeugs in einem Werkzeughalter einer Streckblasvorrichtung gemäß einer der vorig bezeichneten Ausführungsformen oder einer Streckblasmaschine gemäß der vorig bezeichneten Ausführungsformen, mit folgenden Schritten:
- Aufnehmen der ersten Verriegelungsposition mittels des bildgebenden fernoptischen Sensors, sodass die erste Verriegelungsposition über die Sichtachse aufgenommen ist,
- Prüfen des Vorhandenseins des ersten Schließzustandsanzeigers an der ersten Verriegelungsposition, wobei bei einem Vorhandensein des ersten Schließzustandsanzeigers an der ersten Verriegelungsposition ein Detektieren des ersten Schließzustandsanzeigers an der ersten Verriegelungsposition erfolgt,
- Ausgeben eines Verriegelungssignals, sofern der erste Schließzustandsanzeiger an der ersten Verriegelungsposition positiv detektiert ist oder Ausgeben eines Warnsignals, sofern der erste Schließzustandsanzeiger an der ersten Verriegelungsposition negativ detektiert ist,
sodass der Haltezustand des Formwerkzeuges im Werkzeughalter geprüft ist.

Durch dieses Vorgehen ist ein zumindest automatisiertes Überprüfen der jeweiligen Verriegelungszustände oder des Verriegelungszustandes an einer entsprechenden Streckblasvorrichtung möglich.

Das "Aufzeichnen" beschreibt dabei das Auswerten beispielsweise einer Bildinformation des bildgebenden fernoptischen Sensors durch eine Auswerteeinrichtung. In einer einfachen Ausführung wird dabei ein Bild der Verriegelungsposition beispielsweise elektronisch aufgenommen und als Pixelmatrix bereitgestellt.

Das "Prüfen" erfolgt dabei insbesondere durch das Auswerten des beispielhaft genannten Bildes oder einer anderen optischen Information vom bildgebenden optischen Sensor derart, dass beispielsweise durch einen Kontrast, eine Kontrastauswertung oder eine Pixelauswertung auf das Vorhandensein des Schließzustandsanzeigers oder des jeweiligen Schließzustandsanzeigers geschlossen wird.

Das "Ausgeben" eines Verriegelungssignals beschreibt dann das Erzeugen eines maschinenlesbaren oder auch personenlesbaren Signals derart, dass der Vergleich beispielsweise einer erwarteten Position und einer real ausgewerteten Position des Schließzustandsanzeiger positiv erfolgt ist und damit das sichere Verriegeln der Vorrichtung angezeigt wird. Ebenso kann ein "Warnsignal" ausgegeben werden, sofern der Schließzustandsanzeiger die erste Verriegelungsposition nicht oder nicht vollständig erreicht hat.

Gemäß einer Ausgestaltung erfolgt ein Aufzeichnen der ersten Verriegelungsposition, der zweiten Verriegelungsposition und/oder der weiteren Verriegelungspositionen, wobei das Prüfen des Vorhandenseins eines jeweiligen Schließzustandsanzeigers erfolgt und wobei das Ausgeben des Verriegelungssignals erfolgt, sofern alle Schließzustandsanzeiger an der jeweiligen Verriegelungsposition positiv detektiert sind oder das Ausgeben eines Warnsignals, sofern zumindest ein Schließzustandsanzeiger an der jeweiligen Verriegelungsposition negativ detektiert ist.

Gemäß einer weiteren Ausgestaltung erfolgt dabei das Prüfen des Vorhandenseins des ersten Schließzustandsanzeigers, des zweiten Schließzustandsanzeigers und/oder des jeweiligen Schließzustandsanzeigers an der jeweiligen Verriegelungsposition mittels eines Prüfens des Vorhandenseins eines jeweiligen Bedienelementes an der jeweiligen Verriegelungsposition.

Gemäß einer weiteren Ausgestaltung erfolgt das Prüfen des Vorhandenseins des ersten Schließzustandsanzeigers, des zweiten Schließzustandsanzeigers und/oder des jeweiligen Schließzustandsanzeigers an der jeweiligen Verriegelungsposition anhand eines Kontrastes des Bedienelementes oder anhand eines Kontrastes eines jeweiligen Bedienelements gegenüber dem Werkzeughalter, gegenüber einer Werkzeughalterhälfte und/oder gegenüber einem Hintergrund.

Im Weiteren wird die Erfindung anhand von Ausführungsbeispielen näher erläutert. Es zeigen
- Figur 1: eine schematische Darstellung einer Streckblasmaschine in einer Draufsicht,
- Figur 2a: eine Beobachtungszone einer Kamera in einer schematischen Darstellung,
- Figur 2b: eine schematische Darstellung des Sichtfeldes der Kamera der Figur 2a,
- Figur 2c: eine Detaildarstellung eines Bildes einer Verriegelungszone in der Figur 2b,

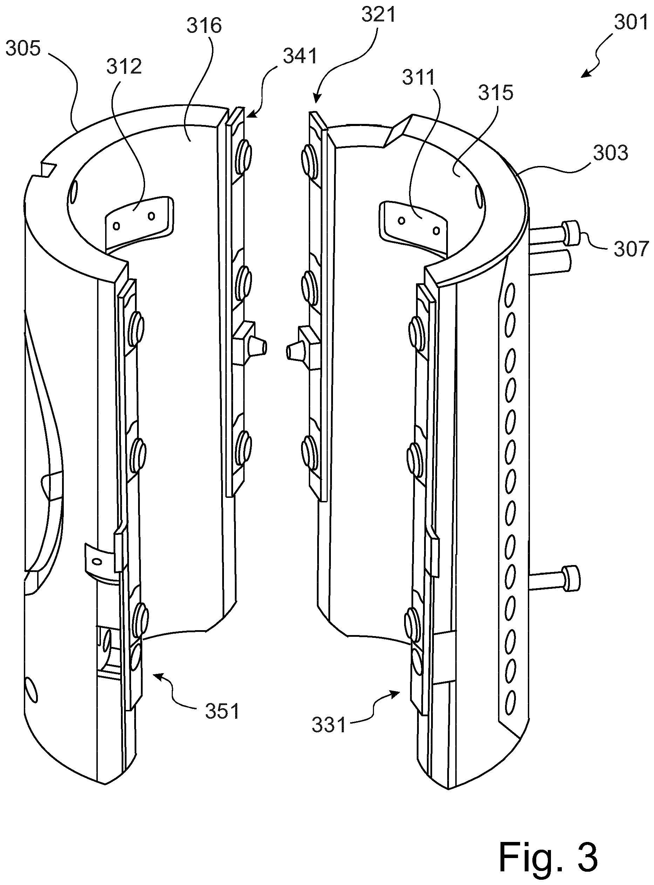

- Figur 3: eine schematische Übersichtsdarstellung einer Werkzeugaufnahme in einer isometrischen Ansicht,
- Figur 4: eine schematische Übersichtsdarstellung eines Wechselvorganges in der Streckblasmaschine der Figur 1 mit der Werkzeugaufnahme der Figur 3, sowie
- Figur 5a und b: Aufnahmehälften eines Werkzeughalters in einem jeweiligen entriegelten Zustand und verriegelten Zustand in einer isometrischen Ansicht.

Eine Streckblasmaschine 101 weist einen Maschinenrahmen 103 auf, in dem um eine Drehachse 106 drehbar ein Kreisel 105 zur Aufnahme einer Vielzahl von Formwerkzeughaltern angeordnet ist. Die Streckblasmaschine dient dabei dem sukzessiven Erzeugen von streckgeblasenen Flaschen (nicht dargestellt) durch Umlauf um den Kreisel 105. An jeweiligen Formpositionen 107 sind dabei Formwerkzeuge in Formwerkzeughaltern aufgenommen, wobei in einem Wechselbereich 109 der Austausch von Formwerkzeughälften aus den Formwerkzeughaltern an den jeweiligen Formpositionen 107 ermöglicht ist.

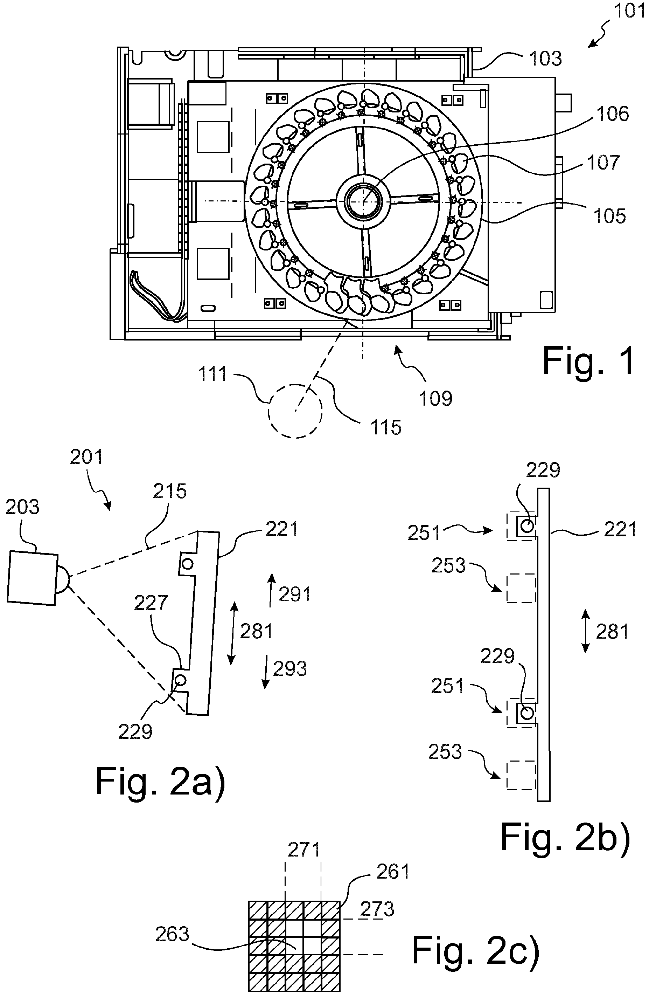

Ein Kamerabereich 111 dient dem Einrichten einer Kamera (in Figur 1 nicht dargestellt) entlang einer Sichtachse 115 mit Blick auf den Wechselbereich 109 und die jeweiligen Formwerkzeughälften (Details siehe weitere Erläuterungen).

In einer Beobachtungszone 201 (vergleiche hierzu auch Figuren 2a bis 2c) dient eine Kamera 203 der Beobachtung einer Verriegelungseinrichtung eines Werkzeughalters (in Figur 2a bis 2c hier beispielhaft dargestellt, Details im Weiteren ausgeführt). Eine Gleitschiene 221 stellt dabei einen Teil einer Verriegelungseinrichtung dar. An der Gleitschiene 221 sind Vorsprünge 227 angeordnet, auf denen Bedienknöpfe 229 angeordnet sind. Die Kamera 203 ist dabei so angeordnet, dass ein freier Blick der Kamera 203 auf die Bedienknöpfe 229 entlang eines Sichtkegels 215 möglich ist. Die Bedienknöpfe 229 sind dabei beispielsweise silbrig glänzend oder anderweitig kontrastierend ausgeführt, wobei die Gleitschiene 221 dunkel eloxiert (also aus Aluminium hergestellt) oder alternativ auch aus dunkel beschichtetem Stahl gebildet ist. Die Gleitschiene 221 kann entlang eines Verriegelungsweges 281 bewegt werden, wobei eine verriegelte Position 291 und eine entriegelte Position 293 einnehmbar ist. Dementsprechend bewegen sich die Bedienknöpfe 229 im Bildbereich der Kamera 203.

Eine Verriegelungszone 251 und eine Entriegelungszone 253 werden durch die Kamera 203 überwacht. Durch den starken optischen Kontrast des Bedienknopfes 229 gegenüber der Gleitschiene 221 ist damit eine pixelweise Auswertung (vergleiche dazu auch Figur 2c) möglich. Pixel 261 werden dabei ausgewertet (beispielsweise mittels einer computergestützten Auswertung der Kamera 203), wobei insbesondere helle Pixel in einer Prüfzone 263 gegenüber kontrastierenden dunklen umliegenden Pixeln erkannt werden können. Die Prüfzone 263 wird dabei entlang einer Prüfbreite 271 und einer Prüfhöhe 273 beispielsweise durch eine Anzahl und Position von Pixeln definiert. Sofern also entsprechend helle Pixel in der Prüfzone 263 detektiert sind, kann davon ausgegangen werden, dass der Bedienknopf 229 in der Verriegelungszone 251 oder gleichsam auch in der Entriegelungszone 253 angeordnet ist. Folglich kann die Position der Gleitschiene 221 und damit der Verriegelungszustand eines Werkzeuges durch die Kamera 203 detektiert werden, insbesondere ohne weitere mechanische Sensorik.

Im Weiteren seien konkrete Beispiele für die Ausführung von Werkzeughaltern und entsprechenden Gleitschienen sowie Bedienknöpfen und weiterer Bauteile beschrieben:
Eine Werkzeugaufnahme 301 weist eine Aufnahmehälfte 303 und eine Aufnahmehälfte 305 auf. Die Werkzeugaufnahme 301 ist dabei mittels befestigungsmitteln 307 in beispielsweise unterschiedlichen Werkzeughalterteilen aufgenommen. Hierzu können beispielsweise Schrauben oder auch Stifte verwendet werden. Eine Tasche 311 sowie eine Tasche 312 an jeweiligen Innenflächen 315 und 316 dienen der exakten Positionierung einer Werkzeughälfte in der jeweiligen Aufnahmehälfte 303 oder 305. Das jeweilige Formwerkzeug, respektive die jeweilige Formwerkzeughälfte, liegt dabei in einer vollständig eingebrachten Position an den Innenflächen 315 und 316 an.

Verriegelungen 321, 331, 341 und 351 dienen dabei dem Verriegeln der Werkzeughälften (Werkzeughälften hier nicht dargestellt) innerhalb der Aufnahmehälften 303 und 305.

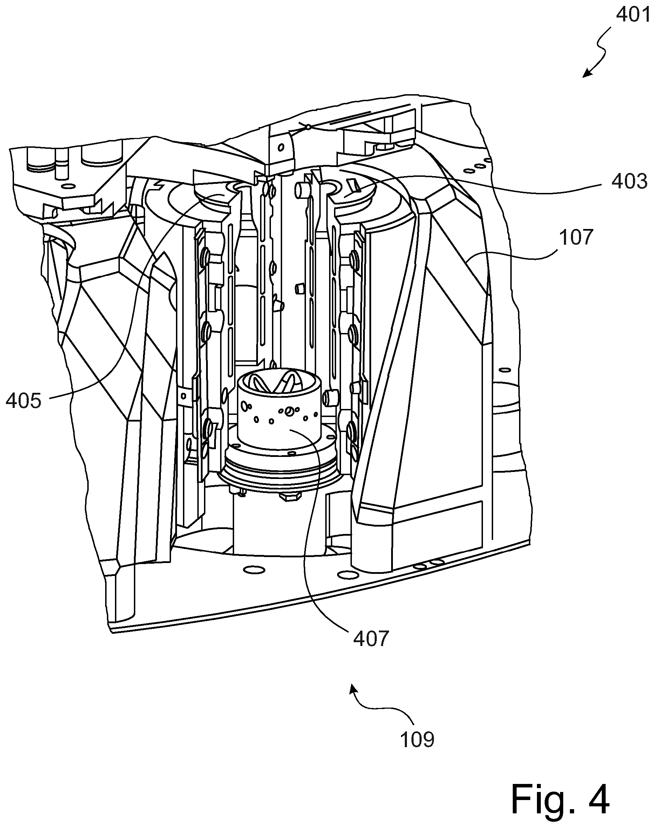

Ein Wechselvorgang 401 wird dabei durchgeführt (vergleiche hierzu Figur 4), indem in der Wechselzone 109 der Streckblasmaschine 101 die Aufnahmehälften 303 sowie 305 oder andere Aufnahmehälften anderer Werkzeughalter teilweise geöffnet werden, sodass Werkzeughälften 403 und 405 sowie auch ein Werkzeugboden 407 beispielsweise mittels eines Roboters entnommen werden können.

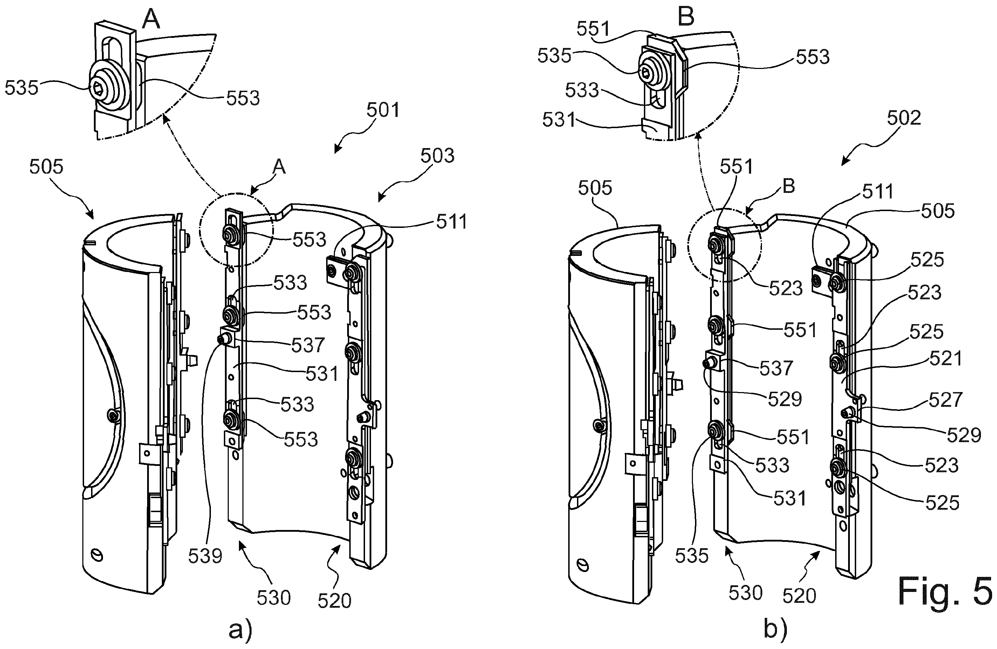

Die detaillierte Funktion von Verriegelungen an solchen Werkzeughalterhälften sei wie folgt erläutert:
Ein entriegelter Zustand 501 sowie ein verriegelter Zustand 502 von Aufnahmehälften 503 und 505 sind insbesondere in Figur 5a und b dargestellt.

Ein Positionierstück 511 in den jeweiligen Aufnahmehälften 503 und 505 dient dem positionierten Einbringen einer Formwerkzeughälfte analog der vorig gezeigten Beispiele (Formwerkzeughälften hier nicht gezeigt). Eine Verriegelung 520 weist dabei eine Gleitschiene 521 auf, welche axial in Langlöchern 523 geführt ist. Die Gleitschiene 521 ist dabei mittels Schrauben 525 mit Tellerkopf an der Aufnahmehälfte 503 befestigt. Ein Vorsprung 527 an der Gleitschiene 521 dient der Aufnahme eines Bedienknopfes 529, wobei der Bedienknopf 529 hier stark silbrig reflektierend ausgebildet ist und damit analog zum obigen Beispiel einen starken Kontrast zur beispielsweise schwarz beschichteten Gleitschiene 521 bildet.

Eine Gleitschiene 531 ist auf einer gegenüberliegenden Seite der Aufnahmehälfte 503 angeordnet und entlang Langlöchern 533 mit Schrauben 535 analog der Gleitschiene 521 angeordnet. Ein Absatz 537 trägt einen Bedienknopf 539, wobei hier der Bedienknopf 539 gegenüber dem Absatz 537 stark kontrastierend ausgebildet ist.

In einem schrägen Langloch (nicht gezeigt) wird ein Riegel 551 derart geführt, dass eine Nase 553 in Richtung der Innenseite der Aufnahmehälfte 503 eingeschoben wird, sofern die Gleitschiene 531 axial bewegt wird. In einer umgekehrten Wirkrichtung wird die Nase 553 aus dem Innenbereich der Aufnahmehälfte 503 gezogen.

Analog dazu sind die Verriegelung 520 sowie Verriegelungen 540 und Verriegelungen 550 an der gegenüberliegenden Aufnahmehälfte 505 ausgeführt.

Soll nun ein Werkzeugwechsel erfolgen, so kann beispielsweise ein Roboter (nicht gezeigt) entsprechende Werkzeughälften greifen, an den jeweiligen Bedienknöpfen die Verriegelung entriegeln und die Werkzeughälften einlegen. Weiterhin kann der Roboter mit einem Endeffektor (ebenfalls nicht dargestellt) dann die Bedienknöpfe nutzen, um das Verriegeln durchzuführen. Mittels der Kamera 203 wird dann wie beschrieben der Verriegelungszustand überprüft, sodass bei Vorhandensein aller Bedienknöpfe in den jeweiligen Verriegelungspositionen ein sicheres Verriegeln der Werkzeughälften detektiert ist.

### Bezugszeichenliste

- 101: Streckblasmaschine
- 103: Maschinenrahmen
- 105: Kreisel
- 106: Drehachse
- 107: Formposition
- 109: Wechselbereich
- 111: Kamerabereich
- 115: Sichtachse
- 201: Beobachtungszone
- 203: Kamera
- 215: Sichtkegel
- 221: Gleitschiene
- 227: Vorsprung
- 229: Bedienknopf
- 251: Verriegelungszone
- 253: Entriegelungszone
- 261: Pixel
- 263: Prüfzone
- 271: Prüfbreite
- 273: Prüfhöhe
- 281: Verriegelungsweg
- 291: verriegelte Position
- 293: entriegelte Position
- 301: Werkzeugaufnahme
- 303: Aufnahmehälfte
- 305: Aufnahmehälfte
- 307: Befestigungsmittel
- 311: Tasche
- 312: Tasche
- 315: Innenfläche
- 316: Innenfläche
- 321: Verriegelung
- 331: Verriegelung
- 341: Verriegelung
- 351: Verriegelung
- 401: Wechselvorgang
- 403: Werkzeughälfte
- 405: Werkzeughälfte
- 407: Werkzeugboden
- 501: entriegelter Zustand
- 502: verriegelter Zustand
- 503: Aufnahmehälfte
- 505: Aufnahmehälfte
- 511: Positionierstück
- 520: Verriegelung
- 521: Gleitschiene
- 523: Langloch
- 525: Schraube
- 527: Vorsprung
- 529: Bedienknopf
- 530: Verriegelung
- 531: Gleitschiene
- 533: Langloch
- 535: Schraube
- 537: Absatz
- 539: Bedienknopf
- 540: Verriegelung
- 550: Verriegelung
- 551: Riegel
- 553: Nase

## Patentansprüche

1. Streckblasvorrichtung (101) mit einem Werkzeughalter (301, 501) zum Aufnehmen eines Formwerkzeuges (403, 405) für Streckblasgegenstände, wobei der Werkzeughalter (301, 501) eine erste Verriegelungseinrichtung (321, 520) zum verriegelnden Halten eines aufgenommenen Formwerkzeuges (403, 405) aufweist, wobei die erste Verriegelungseinrichtung (221, 321, 520) durch ein Bewegen von einer offenen Position (251) in eine verriegelte Position (253) aktivierbar ist, das Formwerkzeug (403, 405) in der verriegelten Position (253) verriegelt im Werkzeughalter (301, 501) aufgenommen ist und ein erster Schließzustandsanzeiger (229, 529) der ersten Verriegelungseinrichtung (221, 321, 520) in der verriegelten Position an einer ersten Verriegelungsposition angeordnet ist, **dadurch gekennzeichnet, dass** der ersten Verriegelungseinrichtung (221, 321, 520) ein bildgebender fernoptischer Sensor (203) zugeordnet ist, wobei der bildgebende fernoptische Sensor (203) auf einer Sichtachse (115, 213) zum ersten Schließzustandsanzeiger angeordnet und dazu eingerichtet ist, entlang der Sichtachse (115, 215) ein fernoptisches Detektieren des ersten Schließzustandsanzeigers (229, 529) an der ersten Verriegelungsposition (251) durchzuführen.

2. Streckblasvorrichtung gemäß Anspruch 1, **dadurch gekennzeichnet, dass** die erste Verriegelungseinrichtung (221, 321, 520) an einer ersten Werkzeughalterhälfte (303, 503) und eine zweite Verriegelungseinrichtung (341) an einer zweiten Werkzeughalterhälfte (305, 505) des Werkzeughalters (301, 501) angeordnet ist, wobei ein zweiter Schließzustandsanzeiger der zweiten Verriegelungseinrichtung (341) in der verriegelten Position an einer zweiten Verriegelungsposition angeordnet ist, der bildgebende fernoptische Sensor (203) auf einer jeweiligen Sichtachse (115, 215) zum jeweiligen Schließzustandsanzeiger angeordnet und dazu eingerichtet ist, entlang der jeweiligen Sichtachse (115, 215) ein fernoptisches Detektieren des ersten Schließzustandsanzeigers (229, 529) und des zweiten Schließzustandsanzeigers an der jeweiligen Verriegelungsposition (251) durchzuführen.

3. Streckblasvorrichtung gemäß Anspruch 1 oder 2, **dadurch gekennzeichnet, dass** eine weitere Verriegelungseinrichtung (331) oder weitere Verriegelungseinrichtungen (351) an der ersten Werkzeughalterhälfte (303, 503) und/oder an der zweiten Werkzeughalterhälfte (305, 505) angeordnet ist oder sind, wobei ein jeweiliger weiterer Schließzustandsanzeiger (539, 559) der weiteren Verriegelungseinrichtung (331, 351) in der verriegelten Position an einer jeweiligen Verriegelungsposition angeordnet ist und der bildgebende fernoptische Sensor (203) auf einer jeweiligen Sichtachse (115, 215) zum jeweiligen Schließzustandsanzeiger (329, 529) angeordnet und dazu eingerichtet ist, entlang der jeweiligen Sichtachse (115, 215) ein fernoptisches Detektieren der jeweiligen Schließzustandsanzeiger (329, 529) an der jeweiligen Verriegelungsposition durchzuführen.

4. Streckblasvorrichtung gemäß einem der vorherigen Ansprüche, **dadurch gekennzeichnet, dass** der erste Schließzustandsanzeiger (229, 529), der zweite Schließzustandsanzeiger (329) und/oder der jeweilige Schließzustandsanzeiger (539) ein Bedienelement (529, 539) oder ein jeweiliges Bedienelement (529, 539) zum Betätigen der jeweiligen Verriegelungseinrichtung (221, 321, 520), insbesondere zum Betätigen der jeweiligen Verriegelungseinrichtung mittels eines Werkzeuges und/oder mittels eines Roboters, aufweist oder aufweisen.

5. Streckblasvorrichtung gemäß Anspruch 4, **dadurch gekennzeichnet, dass** das Bedienelement (529, 539) oder das jeweilige Bedienelement (529, 539) den jeweiligen Schließzustandsanzeiger (229, 529, 539) bildet.

6. Streckblasvorrichtung gemäß einem der vorherigen Ansprüche, **dadurch gekennzeichnet, dass** der erste Schließzustandsanzeiger (229) und/oder der jeweilige Schließzustandsanzeiger (529, 539), insbesondere das Bedienelement (529, 539) oder das jeweilige Bedienelement (529, 539) einen optischen, mittels des bildgebenden fernoptischen Sensors (203) detektierbaren, Kontrast zur jeweiligen Verriegelungseinrichtung (221, 321, 331, 341, 341, 520, 530, 540, 550) aufweist, wobei der optische Kontrast insbesondere mittels eines unterschiedlichen Materials, mittels einer unterschiedlichen Beschichtung und/oder mittels einer unterschiedlichen Oberflächenbearbeitung des jeweiligen Bedienelementes (529, 539) erzeugt ist.

7. Streckblasvorrichtung gemäß einem der vorherigen Ansprüche, **dadurch gekennzeichnet, dass** die jeweilige Verriegelungseinrichtung (221, 321, 331, 341, 341, 520, 530, 540, 550) einen Vorreiber (551, 553) oder mehrere Vorreiber (551, 553), insbesondere einen oder mehrere mittels eines Verriegelungsschiebers (221, 521, 531) und einer im Verriegelungsschieber (221, 521, 531) angeordneten Steuerkurve betätigten Vorreiber (551, 553) oder mehrere Vorreiber (551, 553) aufweist.

8. Streckblasvorrichtung gemäß einem der vorherigen Ansprüche, **dadurch gekennzeichnet, dass** der bildgebende fernoptische Sensor (203) mittels einer Kamera (203) oder mittels einer Infrarotkamera gebildet ist.

9. Streckblasmaschine mit einer Streckblasvorrichtung (101) gemäß einem der vorherigen Ansprüche 1 bis 8 und einem Bestückungsroboter, wobei der Bestückungsroboter eine Greifvorrichtung zum Aufnehmen und/oder Ablegen des Formwerkzeuges (403, 407, 407) außerhalb der Streckblasvorrichtung und Abgeben und/oder Herausnehmen des Formwerkzeuges (403, 407, 407) in die Streckblasvorrichtung und/oder aus der Streckblasvorrichtung aufweist.

10. Streckblasmaschine gemäß Anspruch 9, **dadurch gekennzeichnet, dass** der Bestückungsroboter eine Freischalteinrichtung aufweist, wobei die Freischalteinrichtung dazu eingerichtet ist, ein Sperren und ein Freischalten einer Werkzeuginteraktion des Bestückungsroboters durchzuführen, wobei das Sperren der Werkzeuginteraktion erfolgt, sofern zumindest ein Schließzustandsanzeiger (229, 529, 539) an einer jeweiligen Entnahmeposition negativ detektiert ist und das Freischalten der Werkzeuginteraktion erfolgt, sofern zumindest ein jeweiliger Schließzustandsanzeiger (229, 529, 539) oder alle Schließzustandsanzeiger (229, 529, 539) an einer jeweiligen Entnahmeposition positiv detektiert ist oder sind.

11. Streckblasmaschine gemäß Anspruch 9 oder 10, **dadurch gekennzeichnet, dass** der Bestückungsroboter ein Knickarmroboter ist und/oder die Greifvorrichtung einen Aktuator zum mechanischen Betätigen des Bedienelementes (229, 529, 539) oder eines jeweiligen Bedienelementes (229, 529, 539) aufweist.

12. Verfahren zum Prüfen eines Haltezustandes eines Formwerkzeuges in einem Werkzeughalter einer Streckblasvorrichtung (101) gemäß einem der Ansprüche 1 bis 8 oder einer Streckblasmaschine gemäß einem der Ansprüche 9 bis 11, mit folgenden Schritten:
- Aufzeichnen der ersten Verriegelungsposition (251) mittels des bildgebenden fernoptischen Sensors (203), sodass die erste Verriegelungsposition (251) über die Sichtachse (115, 215) aufgezeichnet ist,
- Prüfen des Vorhandenseins des ersten Schließzustandsanzeigers (229, 529, 539) an der ersten Verriegelungsposition (251), wobei bei einem Vorhandensein des ersten Schließzustandsanzeigers (229, 529, 539) an der ersten Verriegelungsposition (251) ein Detektieren des ersten Schließzustandsanzeigers (229, 529, 539) an der ersten Verriegelungsposition (251) erfolgt,
- Ausgeben eines Verriegelungssignals, sofern der erste Schließzustandsanzeiger (229, 529, 539) an der ersten Verriegelungsposition (251) positiv detektiert ist oder Ausgeben eines Warnsignals, sofern der erste Schließzustandsanzeiger (229, 529, 539) an der ersten Verriegelungsposition (251) negativ detektiert ist,
sodass der Haltezustand des Formwerkzeuges (403, 405, 407) im Werkzeughalter (303, 305, 503, 505) geprüft ist.

13. Verfahren gemäß Anspruch 12, **dadurch gekennzeichnet, dass** ein Aufzeichnen der ersten Verriegelungsposition (251), der zweiten Verriegelungsposition (251) und/oder der weiteren Verriegelungspositionen (251) erfolgt, wobei das Prüfen des Vorhandenseins eines jeweiligen Schließzustandsanzeigers (229, 529, 539) erfolgt und wobei das Ausgeben eines Verriegelungssignals erfolgt, sofern alle Schließzustandsanzeiger (229, 529, 539) an der jeweiligen Verriegelungsposition (251) positiv detektiert sind oder das Ausgeben eines Warnsignals, sofern zumindest ein Schließzustandsanzeiger (229, 529, 539) an der jeweiligen Verriegelungsposition (251) negativ detektiert ist.

14. Verfahren gemäß Anspruch 12 oder 13, **dadurch gekennzeichnet, dass** das Prüfen des Vorhandenseins des ersten Schließzustandsanzeigers (221), des zweiten Schließzustandsanzeigers (529) und/oder des jeweiligen Schließzustandsanzeigers (229, 529, 539) an der jeweiligen Verriegelungsposition (251) mittels eines Prüfens des Vorhandenseins eines jeweiligen Bedienelementes (229, 529, 539) an der jeweiligen Verriegelungsposition (251) erfolgt.

15. Verfahren gemäß einem der Ansprüche 12 bis 14, **dadurch gekennzeichnet, dass** das Prüfen des Vorhandenseins des ersten Schließzustandsanzeigers (229), des zweiten Schließzustandsanzeigers (529) und/oder des jeweiligen Schließzustandsanzeigers (229, 529, 539) an der jeweiligen Verriegelungsposition (251) anhand eines Kontrastes des Bedienelementes (229) oder anhand eines Kontrastes eines jeweiligen Bedienelementes (229, 529, 539) gegenüber dem Werkzeughalter, gegenüber einer Werkzeughalterhälfte (303, 305, 503, 505) und/oder gegenüber einem Hintergrund erfolgt.
